# EUROPÄISCHE PATENTSCHRIFT

(11) **EP 0 938 700 B1**
(45) Veröffentlichungstag und Bekanntmachung des Hinweises auf die Patenterteilung: **20.12.2000**
(21) Anmeldenummer: 97949922.5
(22) Anmeldetag: 14.11.1997
(51) Int. Cl.: G06F 3/033

(54) **VORRICHTUNG ZUR DARSTELLUNG VON VORTRAGSUNTERLAGEN**
DEVICE FOR DISPLAYING PRESENTATION DOCUMENTS
DISPOSITIF POUR PRESENTER DES DOCUMENTS DANS LE CADRE D'EXPOSES

(30) Priorität: 14.11.1996 DE 19647122
(43) Veröffentlichungstag der Anmeldung: 01.09.1999
(73) Patentinhaber: Obermayer, Anton, Dr.-Ing., 91054 Erlangen (DE)
(72) Erfinder: Obermayer, Anton, Dr.-Ing., 91054 Erlangen (DE)
(74) Vertreter: Patentanwälte Eisele, Otten & Roth
(86) Internationale Anmeldenummer: DE9702667
(87) Internationale Veröffentlichungsnummer: WO9821646

(56) Entgegenhaltungen:
- EP-A- 0 692 760
- US-A- 4 730 186
- US-A- 4 846 694
- US-A- 5 526 023
- US-A- 5 629 714

## Beschreibung

Die Erfindung betrifft eine Vorrichtung zur Darstellung von Vortragsunterlagen nach dem Oberbegriff des Anspruchs 1.

Zur besseren Veranschaulichung der vorgetragenen Themen werden bei Vorträgen, beispielsweise in Seminaren, Kongressen, Vorlesungen, Präsentationen, usw. gerne Folien verwendet, die von sogenannten Overheadprojektoren auf eine große Leinwand projiziert werden und die somit für den gesamten Teilnehmerkreis der jeweiligen Veranstaltung sichtbar sind. Derartige Folien werden in der Regel vom Vortragenden vorbereitet und können zusätzlich während des Vortrags mit speziellen Markierungsstiften beschriftet oder bemalt werden.

Mittlerweile sind auch elektronische Displays bekannt geworden, die auf einen Overheadprojektor aufgelegt werden können, wobei das auf dem Display angezeigte Bild durch den Projektor auf die Leinwand projiziert wird. Das Display ist hierbei an einen Computer angeschlossen, so daß die jeweilige Darstellung anhand von im Rechner abgespeicherten Daten auf dem Display erzeugt wird. Diese Anordnung bietet den Vorteil, daß Computerprogramme zur Herstellung der Darstellungen verwendet werden können und insbesondere Abläufe auf dem Monitor des Computers zeitgleich projizierbar sind. Somit bietet ein derartiges Display nicht nur die Möglichkeit statische Bilder zu projizieren, sondern auch nach Art eines Films dynamische bewegliche Bilder.

Mittlerweile sind im Handel auch Projektionsgeräte (sogenannte Multi-Media Projektoren) erhältlich, die unabhängig von einem Overheadprojektor in der Lage sind, Bilder, die anhand eines Computers in Form von Daten übermittelt werden, zu erzeugen und zu projizieren. Auch diese Geräte werden gerne bei Vorträgen zur Darstellung der Vortragsunterlagen verwendet.

Weiterhin werden neuerdings im Handel Geräte angeboten (sogenannte "Message Pads"), die eine sensible Oberfläche aufweisen, auf der mit Hilfe eines speziellen Stiftes eine Eingabe von Grafiken, beispielsweise Skizzen oder handschriftliche Notizen, in ein Rechnersystem möglich ist. Über eine Infrarotschnittstelle werden die in dem Handgerät digitalisierten Daten an einen Computer übermittelt und dort weiter verarbeitet bzw. abgespeichert. Ein derartiges Gerät beinhaltet verschiedene Funktionen, zum Beispiel die eines Notizbuches, eines Kalenders, eines Adress- oder Telefonregisters, sonstigen im Rechner eingerichteten Datenbanken, usw. Über spezielle Felder an der sensiblen Fläche des Geräts können auch Steuerkommandos für das Handgerät bzw. den mit dem Handgerät in Kommunikation stehenden Computer ausgelöst werden.

Im weiteren ist aus der EP 691 606 A1 eine tragbare Informationsverarbeitungseinrichtung bekannt geworden, die in der Lage ist, eine von Hand eingegebene Zeichnung in Echtzeit zu projizieren. Dazu wird das zu projizierende Bild auf einer transmassiven Flüssigkristallanzeige dargestellt, die in einer Basiseinheit angeordnet ist, welche mit einer Lichtquelle durchstrahlt wird. Im weiteren passiert das Licht Linsen und wird an der Rückseite eines Schreibtabletts über weitere Linsen und eine Spiegelplatte an eine Leinwand projiziert. Das Schreibtablett erlaubt dem Betrachter aus einer der Projektionsrichtung entgegengesetzten Richtung das zu projizierende Bild anzuschauen, so daß er während er das Bild beobachtet, Koordinaten durch die Schreibtablettfunktion anfahren und ggf. verändern kann. Zwar wird durch die Anordnung von Flüssigkeitskristallbildschirm, optischen Elementen und Schreibtablett erreicht, daß eine Bedienperson, die am Schreibtablett das zu projizierende Bild verändern möchte, den Projektionslichtstrahl nicht stört. Allerdings hat das System den entscheidenden Nachteil, daß die Anordnung des Schreibtabletts und damit die Position der Bedienperson sowie die Richtung, in der das Bild projiziert wird, untrennbar voneinander abhängen.

US 4 730 186 A offenbart ein Anzeigesystem in Form eines flachen Bildschirms mit integrierter graphischer Eingabe. Damit ist es möglich, einen Ausschnitt eines auf einem weiteren Bildschirm dargestellten Bildes zu bearbeiten und diesen Ausschnitt dann wieder dort einzufügen.

Aufgabe der Erfindung ist es, ausgehend vom vorgenannten Stand der Technik eine flexiblere Vorrichtung vorzuschlagen, mittels der Vortragsunterlagen auf einer Sichtfläche dargestellt werden können, wobei die Bearbeitung und Speicherung in einem Computer mit den entsprechenden Vorteilen erfolgt und zugleich eine Beschriftung oder Bemalung der Vortragsunterlagen während des Vortrags problemlos durch den Vortragenden möglich ist.

Diese Aufgabe wird ausgehend von einer Vorrichtung der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Entsprechend ist bei einer erfindungsgemäßen Vorrichtung zur Darstellung von Vortragsunterlagen eine Eingabeeinheit mit einer Eingabefläche, z. B. ein kapazitiv oder resistiv arbeitendes Schreibtablett vorhanden, die eine Dateneingabe durch graphische Markierung erlaubt, wobei Mittel zur unmittelbaren Weitergabe der eingegebenen Daten vom Computersystem an die jeweiligen Darstellungsmittel vorhanden sind. Auf diese Weise wird eine interaktive Eingriffnahme auf das darzustellende Bild möglich.

Ein Hauptaspekt der Erfindung liegt nun darin, daß als Darstellungseinheit ein sogenannter Multimediaprojektor und/oder ein Projektionsdisplay zur Auflage auf einen bekannten Overheadprojektor und/oder ein Großbildschirm verwendet wird, daß hinter der Eingabefläche der Eingabeeinheit Anzeigemittel, z. B. eine Flüssigkristallanazeige, angeordnet sind, auf denen das von den Darstellungsmitteln bereitgestellte Bild zumindest teilweise beim Eingeben an der Eingabe fläche betrachtet und als Vorlage verwendet werden kann. Dabei werden Änderungen, die am Schreibtablett vorgenommen werden vom Rechner unmittelbar an die Darstellungsmittel und auch an die Anzeigemittel weitergegeben. Hierfür sollte die Eingabefläche wenigstens zum Teil transparent ausgebildet sein. Als hinterlegte Anzeigemittel kommen z. B. ein LCD-Display in Frage. Ausgangspunkt wird häufig eine über den Rechner auf den Anzeigemitteln und den Darstellungsmitteln wiedergegebene vorbereitete Abbildung sein. Diese Abbildung ersetzt die bislang bekannte Folie, auf die sodann der Vortragende zusätzliche Anmerkungen anbringen kann, die wiederum unmittelbar dargestellt werden. Der Vortragende kann seine Eingaben somit sofort auf der Eingabefläche sehen.

Als weiterer wesentlicher Aspekt der Erfindung sind die Darstellungsmittel und die verbleibenden Vorrichtungsbestandteile als separate Baueinheiten ausgebildet. Diese Maßnahme hat den Vorteil, daß der Vortragende von der Position der Darstellungsmittel - dies kann ein Projektor (Overheadprojektor, Videoprojektor, usw.) oder ein Großbildmonitor sein - unabhängig ist. Denn er kann die Eingabeeinheit mit Eingabefläche und dahinterliegenden Anzeigemittel im wesentlichen nach seinen Vorlieben - vortragen im Stehen, Sitzen mit Ausrichtung frontal zum Auditorium oder seitlich - frei anordnen. Dabei werden z. B. die Vorteile von herkömmlichen Overheadprojektoren vollständig erhalten. Denn es ist nicht nur ein Einsatz bei Tageslicht möglich, sondern es können auch stets handschriftliche Eintragungen oder Änderungen für zusätzliche Erläuterungen wie bei gewöhnlichen Folien vorgenommen werden. Ein weiterer Vorteil ist darin zu sehen, daß der Vortragende im Gegensatz zu einem Anwendungsfall bei dem ein Projektor zum Einsatz kommt, nicht mehr geblendet wird, wodurch eine Gesundheitsgefährdung durch Strahlung des Projektors ausgeschaltet ist. Gleichermaßen wird eine ungünstige Sitz-oder Stehhaltung meist mit dem Projektorkopf zwischen Redner und Zuhörer vermieden. Außerdem wird eine Schattenbildung oder eine unbemerkte Verschiebung des projizierten Bildes verhindert, die Reinigung der beschriebenen Folie entfällt, das Ordnen, Aufbewahren und das Transportieren der Vortragsunterlagen erfolgt mit elektronischen Speichermedien, usw. Zudem ist über die statische Bildfolge hinaus auch der Einsatz bewegter Bilder oder eine Einbindung von Multimediaeffekten möglich.

Vorzugsweise wird das komplette, auf der Sichtfläche abgebildete Bild auch auf den Anzeigemitteln dargestellt. Hierdurch bekommt der Vortragende eine gute Übersicht.

Vorteilhafterweise wird die Verbindung der Eingabeeinheit zum Computersystem drahtlos realisiert. In Frage kommt hier beispielsweise eine Infrarotschnittstelle oder ähnliche drahtlose Verbindungen.

Vorzugsweise wird die Eingabefläche als berührungs- oder näherungsempfindliche Fläche ausgebildet, auf der mit Hilfe eines entsprechenden Stiftes die genannte graphische Markierung erfolgt. Auf der Eingabefläche der Eingabeeinheit kann somit wie bei bisher bekannten Folien skizziert und geschrieben werden, wobei die entsprechenden Notizen oder Skizzen unmittelbar in Bilddaten umgesetzt werden, die über die Darstellungsmittel abgebildet werden.

Weiterhin wird vorteilhafterweise die Möglichkeit vorgesehen, Steuerkommandos auf dem Eingabemitteln einzugeben. In Frage kommen hier beispielsweise die Eingabemöglichkeit für einen Dateiaufruf oder Seitenvorschub innerhalb einer Datei. Dieses Kommando kann beispielsweise für den Wechsel eines statischen Bildes (vergleichbar mit einem Folienwechsel bei herkömmlicher Vortragstechnik) verwendet werden. Entsprechende Start- oder Stopkommandos für die Wiedergabe dynamisch bewegter Bilder sind ebenfalls von Vorteil.

Weiterhin kann die Auswahl graphischer Gestaltungselemente, beispielsweise die Farbauswahl und/oder die Strichbreite für nachfolgende graphische Markierungen über derartige Kommandoeingaben realisiert werden. Diese Eingabemöglichkeiten können beispielsweise wie bei dem oben angeführten "Message Pad" oder bei sogenannten CAD-Systemen über entsprechende Schaltflächen, die mit Symbolen versehen sind und bei deren Berührung ein entsprechendes Eingabeprogramm abläuft, realisiert werden.

Vorteilhafterweise wird zusätzlich eine Texterkennung für handschriftliche Eingaben vorgesehen. Auf diese Weise können handschriftliche Notizen nicht nur in Form von Bilddaten, sondern auch als Text abgespeichert und weiterverarbeitet werden.

In einer bevorzugten Ausführungsform wird die Eingabeeinheit mit Zusatzfunktionen ausgestattet, beispielsweise einem Terminplaner, einem Translator, einer Notizbuchfunktion, einer Datenbankfunktion usw. In Frage kommen sämtliche bislang beim oben angeführten "Message Pad" bekannten Funktionen oder aber auch künftige Zusatzfunktionen, die für derartige Systeme eingeführt werden.

Vorzugsweise werden zudem Mittel vorgesehen, mittels denen verschiedene separat vorbereitete Abbildungen quasi übereinandergelegt dargestellt werden können. Hierdurch wird die Funktion simuliert, die bislang beim Übereinanderlegen von Transparentfolien gegeben und verschiedentlich bei Vorträgen zur Veranschaulichung der Themen hilfreich war.

Die verschiedenen Komponenten des erfindungsgemäßen Systems können in unterschiedlichen Geräteeinheiten, aber auch kombiniert vorgesehen werden. So könnte beispielsweise der Computer unmittelbar in einen Projektor integriert sein.

In einer besonders vorteilhaften Ausführungsform wird im weiteren vorgeschlagen, daß die Eingabeeinheit in Kombination mit dem Computer, die heutzutage sehr handlich als sogenannte Notebooks oder Leptops herzustellen sind, vorgesehen werden. D. h. vor eine bei einem Leptop ohnehin vorhandene z. B. Flüssigkristallanzeige wird eine zumindest teilweise transparente Eingabeeinheit mit Eingabefläche angeordnet, so daß der Bildschirm zusätzlich die Aufgabe des Anzeigemittels hinter der Eingabeeinheit übernehmen kann. In diesem Fall wäre eine bevorzugt drahtlose Schnittstelle zwischen Computer und Darstellungs- bzw. Wiedergabegerät möglich.

Ein Ausführungsbeispiel der Erfindung ist anhand einer Figur veranschaulicht und wird anhand dieser Figur nachfolgend näher erläutert.

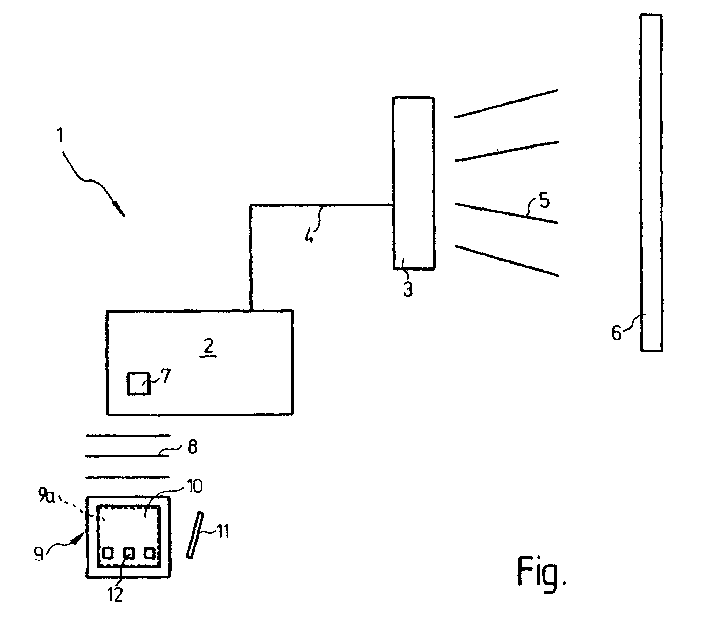

Die einzige Figur zeigt
ein schematisches Blockdiagramm, aus dem der Aufbau einer erfindungsgemäßen Vorrichtung hervorgeht.

Die Vorrichtung 1 gemäß der Figur umfaßt einen Computer 2, der die üblichen Zusatzkomponenten wie Festplatte, Monitor, Tastatur usw. beinhaltet. Er kann je nach Bedarf auch mit sogenannten Multimediakomponenten oder anderen Geräten, beispielsweise einem Scanner, ausgestattet werden.

Über eine seiner Schnittstellen ist der Computer 2 mit einem Projektor 3 verbunden, der die ihm über die Leitung 4 übermittelten Bilddaten in ein reales Bild umsetzt und, wie durch strahlenförmige Linien 5 angedeutet, auf eine Leinwand 6 projiziert. Anstelle des Projektors 3 kann auch ein elektronisches Display zum Auflegen auf einem Overheadprojektor oder ein Großmonitor usw. vorgesehen werden.

Über eine Infrarotschnittstelle 7 steht der Computer 2 wie durch wellenförmige Linien 8 angedeutet, mit einer Eingabeeinheit 9 in Verbindung. Die Eingabeeinheit 9 umfaßt eine transparente Eingabefläche 10, die beispielsweise als berührungsempfindliche Fläche ausgebildet sein kann. Hinter der Eingabefläche 10 ist ein Anzeigemittel 9a angeordnet, auf dem ebenfalls das mit dem Projektor erzeugte Bild dargestellt wird. Die Eingabefläche 10 ist im Anzeigemittel 9a so zugeordnet, daß das Koordinatensystem des Anzeigemittels mit dem der Eingabefläche übereinstimmt, so daß ein Berührungspunkt auf der Eingabefläche mit dem darunterliegenden Bildpunkt in exakter Weise übereinstimmt. Mit einem Stift 11 kann nun ein nicht näher dargestellter Benutzer der Vorrichtung 1 graphische Markierungen, beispielsweise handschriftliche Notizen oder Skizzen, auf der Eingabefläche 10, orientiert an der Abbildung auf den Anzeigemitteln, vornehmen. Diese Markierungen werden sodann durch die Eingabeeinheit 9 in digitale Bilddaten umgesetzt und über die Infrarotschnittstelle 7 drahtlos zum Computer 2 übermittelt, der die Änderungen unmittelbar an den Projektor 3 und über die Infrarotschnittstelle 8 auch an die Anzeigemittel 9a weiterleitet. Auf den Anzeigemitteln 9a und der Projektorleinwand 6, ist daher immer ein aktuelles von einem Benutzer an der Eingabeeinheit 9 ggf. interaktiv verändertes Bild zu sehen.

Mehrere Bedienfelder 12 auf der Eingabefläche 10 dienen zur Eingabe und Ausführung von Steuerkommandos, ähnlich wie bei bekannten CAD-Systemen. Anstelle der Bedienfelder 12 könnten auch Tasten oder andere Eingabemittel, beispielsweise ein Trackball oder dergleichen zur Bedienung der Eingabeeinheit 9 vorgesehen werden.

Der Vortragende, der seinen Vortrag unter Benutzung der Vorrichtung 1 halten möchte, kann somit seine Unterlagen vorbereitet im Speicher des Computers 2 bzw. auf einem vom Computer lesbaren Datenträger ablegen. Er kann diese Unterlagen später über die Eingabeeinheit 9 während seines Vortrags aufrufen, so daß die entsprechenden Darstellungen über den Projektor 3 auf die Leinwand 6 projiziert werden.

Über die Eingabefläche 10 kann der Vortragende ergänzende Bemerkungen, Skizzen oder dergleichen problemlos mit der Hand als graphische Markierungen aufbringen, die sofort im projizierten Bild dargestellt werden. Über die Bedienfelder 12 oder weitere nicht näher dargestellte Bedienelemente der Eingabeeinheit 9 kann der Vortragende zugleich die zeitliche Reihenfolge der Abarbeitung der vorbereiteten Unterlagen steuern. Er kann beispielsweise auf ein bereits zuvor gezeigtes Bild zurückspringen, oder aber auch einen dynamischen Bildablauf starten und stoppen. Er kann auch mehrere Bilder übereinandergelegt darstellen lassen.

Die Eingabeeinheit 9 kann beliebige weitere gewünschte Funktionen beinhalten. Derartige Funktionen sind beispielsweise ein Terminkalender, ein Adressregister, sonstige Datenbanken, einen sogenannten Translator für verschiedene Sprachen, usw..

Die dargestellten Komponenten der Vorrichtung 1, d. h. der Computer 2 sowie die Darstellungsmittel 3 könnten auch in einer Gesamteinheit kombiniert werden. Ebenso wäre es denkbar, daß auch die Verbindungsleitung 4 zwischen der Recheneinheit 2 und den Darstellungsmitteln 3 drahtlos realisiert wird.
- 1: Vorrichtung
- 2: Computer
- 3: Projektor
- 4: Leitung
- 5: Strahlen
- 6: Leinwand
- 7: Infrarotschnittstelle
- 8: Wellenlinie
- 9: Eingabeeinheit
- 9a: Anzeigemittel
- 10: Eingabe fläche
- 11: Stift
- 12: Bedienfeld

## Patentansprüche

1. Vorrichtung zur Darstellung von Vortragsunterlagen in Seminaren, Kongressen, Vorlesungen oder dergleichen auf einer Sichtfläche, mit einem Rechner zur Verarbeitung, Speicherung und Weitergabe von Daten zur Darstellung der Unterlagen, mit Mittel zur Darstellung der unterlagen auf der Grundlage der vom Rechner weitergegebenen Daten und mit einer Eingabeeinheit mit Eingabefläche, die eine Dateneingabe durch graphische Markierung für die interaktive Eingriffnahme auf die vom Rechner weitergegebenen Daten zur Darstellung der Unterlagen auf der Sichtfläche erlaubt, dadurch gekennzeichnet, daß die Darstellungsmittel (3) einen Multimediaprojektor und/oder ein Projektionsdisplay zur Auflage auf einen Overheadprojektor und/oder einen Großbildschirm jeweils in separater Baueinheit umfassen, daß hinter der Eingabefläche (10) der Eingabeeinheit (9) Anzeigemittel (9a) zur wenigstens teilweisen Abbildung der durch die Darstellungsmittel (3) auf der Sichtfläche (6) dargestellten Vortragsunterlagen vorhanden sind, und daß der Rechner (2) unmittelbar die an der Eingabeeinheit (9) eingegebenen Daten an die Darstellungsmittel (3) und gleichermaßen an die Anzeigemittel (9a) hinter der Eingabefläche (10) weitergibt.

2. Vorrichtung nach einem der vorgenannten Ansprüche, dadurch gekennzeichnet, daß eine drahtlose Verbindung zwischen der Eingabeeinheit (9) und dem Computer (2) vorhanden ist.

3. Vorrichtung nach einem der vorgenannten Ansprüche, dadurch gekennzeichnet, daß die Eingabefläche (10) eine berührungs-oder näherungsempfindliche Fläche ist, mittels der mit einem Stift (11) aufgetragene graphische Markierungen in digitale Bilddaten umsetzbar sind.

4. Vorrichtung nach einem der vorgenannten Ansprüche, dadurch gekennzeichnet, daß Mittel zur Eingabe von Steuerbefehlen über die Eingabeeinheit (9) vorhanden sind.

5. Vorrichtung nach Anspruch 4, dadurch gekennzeichnet, daß die Steuerbefehle einen Dateiaufruf oder einen Seitenvorschub, die Auswahl graphischer Gestaltungselemente, eine Farbauswahl und/oder eine Strichbreite beinhalten.

6. Vorrichtung nach einem der vorgenannten Ansprüche, dadurch gekennzeichnet, daß Mittel zur Texterkennung für handschriftliche Eingaben vorhanden sind.

7. Vorrichtung nach einem der vorgenannten Ansprüche, dadurch gekennzeichnet daß die Eingabeeinheit (9) Zusatzfunktionen beinhaltet.

8. Vorrichtung nach einem der vorgenannten Ansprüche, dadurch gekennzeichnet, daß die Eingabeeinheit (9) und die Anzeigemittel den Bildschirm des Rechners bilden.

## Claims

1. Device for presenting lecture papers in seminars, congresses, courses or similar on a view surface, with a computer for processing, storing and relaying data for presenting the papers, with means for presenting the papers on the basis of data relayed by the computer and with an input unit with input face allowing data input by graphic marking for interactive intervention in the data relayed by the computer for presenting the papers on the view surface, characterised in that the means of presentation (3) comprise a multi-media projector and/or a projection display for displaying on an overhead projector and/or a large screen in a separate unit in each case, in that behind the input face (10) of the input unit (9) means of display (9a) are available for at least partial depiction of the lecture papers shown on the view surface (6) by the means of presentation (3), and in that the computer (2) relays the data input at the input unit (9) directly to the means of presentation (3) and similarly to the means of display (9a) behind the input face (10).

2. Device according to one of the preceding claims, characterised in that there is cordless connection between the input unit (9) and the computer (2).

3. Device according to one of the preceding claims, characterised in that the input face (10) is a touch or proximity sensitive face by means of which graphic markings applied with a marker (11) can be converted into digital image data.

4. Device according to one of the preceding claims, characterised in that means are available for inputting control commands via the input unit (9).

5. Device according to claim 4, characterised in that the control commands contain a file call or a page option, the selection of graphic layout elements, a colour selection and/or a line thickness.

6. Device according to one of the preceding claims, characterised in that means are available for text recognition of hand written input.

7. Device according to one of the preceding claims, characterised in that the input unit (9) comprises auxiliary functions.

8. Device according to one of the preceding claims, characterised in that the input unit (9) and the display means form the screen of the computer.

## Revendications

1. Dispositif pour afficher des documents de présentation dans des séminaires, congrès, conférences ou analogues, sur une surface visible, comportant un calculateur pour traiter, mémoriser et retransmettre des données pour afficher les documents, des moyens pour afficher les documents sur la base des données retransmises par le calculateur, et une unité d'entrée ayant une surface d'entrée, qui permet une entrée de données par marquage graphique pour intervenir de façon interactive sur les données, retransmises par le calculateur, pour afficher les documents sur la surface visible,
caractérisé en ce que les moyens d'affichage (3) comportent un projecteur multimédia et/ou un affichage à projection pour le tirage sur un rétroprojecteur et/ou un grand écran, à chaque fois, en unité constructive séparée, en ce que, derrière la surface d'entrée (10) de l'unité d'entrée (9), sont prévus des moyens de visualisation (9a) pour la reproduction au moins partielle des documents de présentation affichés par les moyens d'affichage (3) sur la surface visible (6), et en ce que le calculateur (2) retransmet directement les données entrées au niveau de l'unité d'entrée (9) aux moyens d'affichage (3) et, de même, aux moyens de visualisation (9a) derrière la surface d'entrée (10).

2. Dispositif selon une des revendications précitées,
caractérisé en ce qu'une liaison sans fil est prévue entre l'unité d'entrée (9) et l'ordinateur (2).

3. Dispositif selon une des revendications précitées,
caractérisé en ce que la surface d'entrée (10) est une surface sensible au contact ou à la proximité, au moyen de laquelle des marquages graphiques tracés par un crayon (11) peuvent être transformés en données d'image numériques.

4. Dispositif selon une des revendications précitées,
caractérisé en ce que des moyens sont prévus pour entrer des ordres de commande par l'intermédiaire de l'unité d'entrée (9).

5. Dispositif selon la revendication 4,
caractérisé en ce que les ordres de commande comportent un appel de fichier ou une avance de page, le choix d'éléments de structure graphiques, un choix de couleur et/ou une largeur de trait.

6. Dispositif selon une des revendications précitées,
caractérisé en ce que des moyens pour la reconnaissance de texte pour des entrées manuscrites sont prévus.

7. Dispositif selon une des revendications précitées,
caractérisé en ce que l'unité d'entrée (9) comporte des fonctions supplémentaires.

8. Dispositif selon une des revendications précitées,
caractérisé en ce que l'unité d'entrée (9) et les moyens de visualisation forment l'écran du calculateur.
